(19) Europäisches Patentamt

European Patent Office

Office européen des brevets

(11) **EP 0 901 870 A1**

(12) **EUROPÄISCHE PATENTANMELDUNG**

(43) Veröffentlichungstag:
    **17.03.1999 Patentblatt 1999/11**

(51) Int. Cl.⁶: **B23K 26/00**, C03B 33/08

(21) Anmeldenummer: 98114658.2

(22) Anmeldetag: **04.08.1998**

(84) Benannte Vertragsstaaten:
    **AT BE CH CY DE DK ES FI FR GB GR IE IT LI LU
    MC NL PT SE**
    Benannte Erstreckungsstaaten:
    **AL LT LV MK RO SI**

(30) Priorität: **14.08.1997 DE 19735356**

(71) Anmelder:
    **Linde Aktiengesellschaft
    65189 Wiesbaden (DE)**

(72) Erfinder:
    **Danzer, Wolfgang, Dr. Dipl.-Ing.
    84405 Dorfen (DE)**

(54) **Verfahren zum Laserschneiden von Glas**

(57) Die Erfindung betrifft ein Verfahren zum Schneiden von Glas (4). Erfindungsgemäß wird das Glas (4) mittels eines Laserstrahles und eines Schneidgasstrahles, die beide durch eine Schneiddüse (1) geführt und auf die zu bearbeitende Oberfläche des Glases (4) geleitet (2) werden, geschnitten, wobei das Schneidgas zumindest teilweise mit gegenüber der Umgebungstemperatur am Düsenaustritt erhöhter Temperatur zusammen mit dem Laserstrahl auf die Oberfläche des Glases an der Bearbeitungsstelle trifft. Das Schneidgas enthält vorteilhafterweise Sauerstoff oder besteht bevorzugt aus Sauerstoff. Das Schneidgas kann beim Auftreffen auf die Bearbeitungsstelle an der Oberfläche des Glases (4) eine Temperaturverteilung quer zur Strömungsrichtung auf, wobei die Temperatur im Kernbereich (5) des Schneidgasstrahles geringer ist als die Temperatur in der äußeren Grenzschicht (6) des Schneidgasstrahles. In einer Ausgestaltung der Erfindung strömt aus der Schneiddüse (1) ein Hilfsgas (3), welches in der äußeren Grenzschicht (6) des Schneidgasstrahles in Richtung auf die zu bearbeitende Oberfläche des Glases geleitet wird. Das Hilfsgas kann Wasserstoff umfassen oder bevorzugt aus Wasserstoff bestehen, welcher mit Sauerstoff des Schneidgases verbrennt.

EP 0 901 870 A1

Printed by Xerox (UK) Business Services
2.16.7/3.6

## Beschreibung

Die Erfindung betrifft ein Verfahren zum Schneiden von Glas.

Die Bearbeitung von Glas gestaltet sich in der Regel relativ umständlich, da Glas aufgrund seiner Eigenschaften einer Behandlung wie bei anderen Werkstücken nicht zugänglich ist. Von Bedeutung für die Bearbeitung sind insbesondere die Brüchigkeit und die schlechte Wärmeleitfähigkeit des Glases.

Im folgenden wird ein übliches Verfahren des Schneidens von Glas am Beispiel einer Lampenschirmherstellung aufgezeigt. Dabei ist beispielsweise die Herstellung eines Lochs in dem Lampenschirm aus Glas erforderlich. Zunächst liegt das Glas im Glasofen als flüssiges Glas vor. Aus diesem wird nun ein Lampenschirm geformt. Anschließend findet dann ein langsames Abkühlen des Lampenschirms im Abkühlofen über einen Zeitraum von beispielsweise 5 Stunden statt. Nachfolgend wird mit einem Diamantbohrer das gewünschte Loch ausgebohrt, wobei Wasser als Hilfsmittel zum Einsatz kommt. Der abschließende Arbeitsschritt besteht im Reinigen und Trocknen des Lampenschirms. An diesem Beispiel wird deutlich, daß die Bearbeitung von Glas viele einzelne Bearbeitungsschritte notwendig macht. Die Bearbeitung ist darüber hinaus sehr personalintensiv.

Der Erfindung liegt daher die Aufgabe zugrunde, das Schneiden von Glas zu verbessern und zu vereinfachen, indem die Zahl der notwendigen Arbeitsschritte reduziert wird. Außerdem wird eine Erhöhung des Anteils der maschinellen Bearbeitung angestrebt.

Diese Aufgabe wird erfindungsgemäß dadurch gelöst, daß das Glas mittels eines Laserstrahles und eines Schneidgasstrahles, die beide durch eine Schneiddüse geführt und auf die zu bearbeitende Oberfläche des Glases geleitet werden, geschnitten wird und das Schneidgas zumindest teilweise mit gegenüber der Umgebungstemperatur am Düsenaustritt erhöhter Temperatur zusammen mit dem Laserstrahl auf die Oberfläche des Glases an der Bearbeitungsstelle trifft.

Überraschend ist zunächst, daß das Laserschneiden auch für die Bearbeitung von Glas geeignet ist, da ein Laserschneiden unter üblichen Bedingungen das Glas zum Springen bringt. In diesem Fall treten nämlich am Auftreffpunkt Temperaturdifferenzen in der Größenordnung von etwa 400 °C auf. Beim erfindungsgemäßen Verfahren kommt es nicht zu derart hohen Temperaturdifferenzen, so daß auf diese Weise ein Brechen des Glases in der Regel verhindert werden kann.

Laserschneidverfahren sind an sich bekannt für die Bearbeitung von metallischen Werkstücken. Ein Überblick über die in diesem Zusammenhang zur Anwendung kommenden Verfahren liefert beispielsweise die Veröffentlichung:

• *"Thermische Schneidverfahren:*

*Autogenes Brennschneiden, Plasma-Schmelzschneiden, Laserstrahlschneiden - ein technologischer und wirtschaftlicher Vergleich"*,
H. Mair, DVS-Berichte, Band 109, Deutscher Verlag für Schweißtechnik GmbH, 1987.

Aus der EP 0 458 182 B1 ist außerdem ein Verfahren zum Laserstrahlbrennschneiden von metallischen Werkstücken mit einem fokussierten Laserstrahl und einem Schneidgasstrahl bekannt, die beide durch eine Schneiddüse geführt werden, wobei der Schneidgasstrahl mit einem heißen Gasschleier vorhangartig umhüllt wird. Mittels dieses heißen Gasschleiers wird eine zusätzliche Erwärmung des metallischen Werkstückes in Schnittdickenrichtung bewirkt, wodurch eine Aufhärtung in der entstehenden Schnittfuge verhindert werden soll.

Im erfindungsgemäßen Verfahren bei der Bearbeitung von Glas ist das Arbeitsgas in der Kontaktzone des zu schneidenden Glases heiß und im Kern, wo das Glas aus der Schnittfuge geblasen werden soll, kälter. Die geringere Temperatur im Kern der Schneidgasströmung bewirkt, daß das Gas mehr Stoßkraft zum` Auswerfen des flüssigen Materials besitzt.

Das Schneidgas enthält Sauerstoff oder besteht bevorzugt aus Sauerstoff. Mit Vorteil wird im letztgenannten Falle Sauerstoff mit einer Reinheit von mindestens 99,5 Gew.-% verwendet.

In Ausgestaltung der Erfindung weist das Schneidgas beim Auftreffen auf die Bearbeitungsstelle an der Oberfläche des Glases eine Temperaturverteilung quer zur Strömungsrichtung auf, wobei die Temperatur im Kernbereich des Schneidgasstrahles geringer ist als die Temperatur in der äußeren Grenzschicht des Schneidgasstrahles.

In einer weiteren vorteilhaften Ausgestaltung der Erfindung strömt aus der Schneiddüse ein Hilfsgas, welches in der äußeren Grenzschicht des Schneidgasstrahles in Richtung auf die zu bearbeitende Oberfläche des Glases geleitet wird.

Besondere Vorteile sind dadurch zu erzielen, daß das Hilfsgas Wasserstoff umfaßt oder bevorzugt aus Wasserstoff besteht, welcher mit Sauerstoff des Schneidgases verbrennt. In diesem Fall wird Wasserstoff nur in der Außenschicht des Sauerstoffstrahles geführt und verbrennt dort.

In Weiterbildung der Erfindung ist eine Erwärmung des Glases beim Schneiden vorgesehen. Dadurch kann die Bearbeitung zusätzlich unterstützt werden. Das Glas wird bevorzugt bei einer Temperatur geschnitten, bei welcher das Glas einerseits Standfestigkeit aufweist und andererseits weitgehend spannungsfrei ist. Das bedeutet, daß man im wesentlichen im "weichen" Zustand des Glases unterhalb der Erweichungstemperatur des Glases arbeitet.

Glas weist eine Temperaturabhängigkeit bezüglich der dynamischen Viskosität oder Zähigkeit $\eta$ auf. Mit Vorteil wird das Glas bei einer Temperatur geschnitten, bei der der lg η einen Wert zwischen 8 und 17 aufweist und p die dynamische Viskosität des Glases - gemessen in Pa · s [≡ N · s/m$^2$ ≡ kg/(m · s)] - ist. Diese Werte sollen am Beispiel von Natronkalkglas verdeutlicht werden. Natronkalkglas besitzt einen lg η mit einem Wert von 8 bei einer Temperatur von etwa 720 °C und einen lg η mit einem Wert von 17 bei einer Temperatur von etwa 380 °C. Zum Vergleich dazu: Die Verarbeitungstemperatur nach dem Glasofen liegt bei etwa 1000 °C, was einem lg η mit einem Wert von etwa 4 entspricht. Mit Vorteil wird das Glas bei einer Temperatur geschnitten, bei der der Wert lg η der dynamischen Viskosität η des Glases zwischen 9 und 13 liegt. Dies bedeutet wiederum am Beispiel des Natronkalkglases Temperaturen in einem Bereich zwischen etwa 530 und etwa 720 °C.

Bevorzugt wird das Schneidgas koaxial mit dem Laserstrahl auf die Oberfläche des Glases geführt.

In der Regel trifft der Laserstrahl im wesentlichen fokussiert auf die Oberfläche des Glases an der Bearbeitungsstelle auf.

Das erfindungsgemäße Verfahren zum Schneiden von Glas bringt eine Reduktion der Arbeitsgänge bei der Glasbearbeitung mit sich. Dies kann an dem oben erwähnten Beispiel unter Verwendung des erfindungsgemäßen Verfahrens verdeutlicht werden. Aus flüssigem Glas aus dem Glasofen wird der Lampenschirm wie oben beschrieben geformt. Anschließend wird das gewünschte Loch mit dem Laser in den Lampenschirm geschnitten. Schließlich erfolgt das langsame Abkühlen des Lampenschirms im Abkühlofen über die dafür erforderliche Zeitspanne, im Beispiel 5 Stunden. Eine Nachbearbeitung durch Reinigen und Trocknen ist nicht mehr notwendig und kann daher entfallen.

Die in der EP 0 458 182 B1 offenbarten Schneiddüsen eignen sich prinzipiell für das erfindungsgemäße Verfahren.

Ganz besonders eignet sich jedoch eine Schneiddüse, welche das heiße Arbeitsgas auf bestimmte Weise, nämlich durch zumindest teilweises Verbrennen des Schneidgases durch ein Hilfsgas im Randbereich der Schneidgasströmung zwischen Schneiddüse und zu bearbeitender Glasoberfläche, erzeugt. Eine derartige Düse wird nachfolgend näher erläutert.

Hierbei zeigt die einzige

Figur: eine Düse für den Einsatz im erfindungsgemäßen Verfahren.

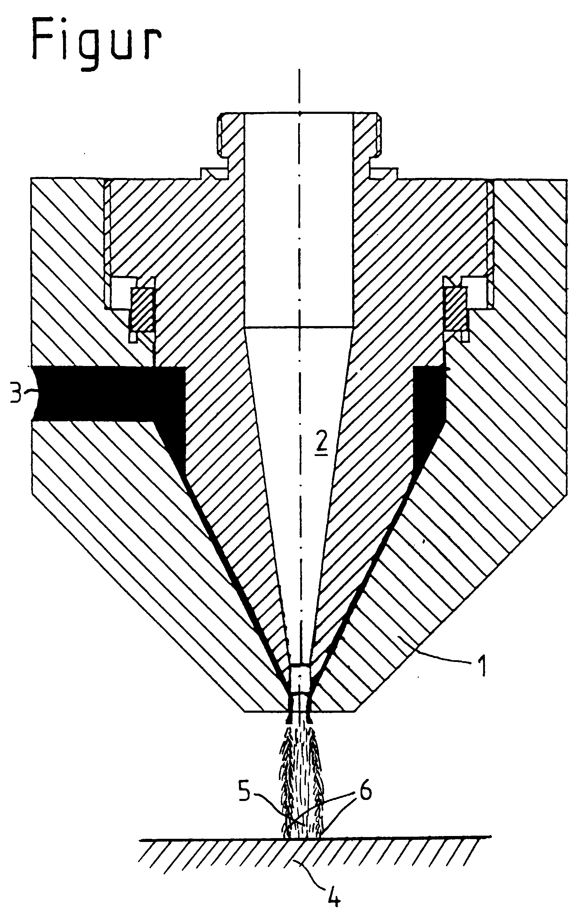

In der Figur ist eine Schneiddüse 1 abgebildet, die einen zentral angeordneten Düsenkanal 2 enthält. Durch diesen zentral angeordneten Düsenkanal 2 wird einerseits der Laserstrahl (nicht dargestellt) und das Schneidgas, beispielsweise Sauerstoff, geleitet. Ferner ist ein weiterer Düsenkanal 3 für das Hilfsgas, beispielsweise Wasserstoff, vorgesehen. Der Schneidsauerstoff strömt - den nicht dargestellten Laserstrahl umgebend - gegen die Oberfläche des Werkstückes 4 aus Glas. Der über den Düsenkanal 3 zugeführte Wasserstoff verbrennt mit Sauerstoff im äußeren Bereich des Sauerstoffstrahles. Daraus resultiert ein kälterer Sauerstoffstrahl im Kernbereich 5 ("kalte" Zone) und ein gegenüber dem Kernbereich erwärmter Sauerstoffstrahl in der äußeren Grenzschicht 6 ("heiße" Zone).

## Patentansprüche

1. Verfahren zum Schneiden von Glas (4), **dadurch gekennzeichnet**, daß das Glas (4) mittels eines Laserstrahles und eines Schneidgasstrahles, die beide durch eine Schneiddüse (1) geführt (2) und auf die zu bearbeitende Oberfläche des Glases (4) geleitet werden, geschnitten wird und das Schneidgas zumindest teilweise mit gegenüber der Umgebungstemperatur am Düsenaustritt erhöhter Temperatur zusammen mit dem Laserstrahl auf die Oberfläche des Glases (4) an der Bearbeitungsstelle trifft.

2. Verfahren nach Anspruch 1, dadurch gekennzeichnet, daß das Schneidgas Sauerstoff enthält oder das Schneidgas aus Sauerstoff besteht.

3. Verfahren nach einem der Ansprüche 1 oder 2, dadurch gekennzeichnet, daß das Schneidgas beim Auftreffen auf die Bearbeitungsstelle an der Oberfläche des Glases (4) ein Temperaturverteilung quer zur Strömungsrichtung dergestalt aufweist, daß die Temperatur im Kernbereich (5) des Schneidgasstrahles geringer ist als die Temperatur in der äußeren Grenzschicht (6) des Schneidgasstrahles.

4. Verfahren nach einem der Ansprüche 1 bis 3, dadurch gekennzeichnet, daß aus der Schneiddüse (1) ein Hilfsgas (3) strömt, welches in der äußeren Grenzschicht (6) des Schneidgasstrahles in Richtung auf die zu bearbeitende Oberfläche des Glases (4) geleitet wird.

5. Verfahren nach Anspruch 4, dadurch gekennzeichnet, daß das das Hilfsgas (3) Wasserstoff umfaßt, welcher mit Sauerstoff des Schneidgases verbrennt.

6. Verfahren nach einem der Ansprüche 1 bis 5, dadurch gekennzeichnet, daß aus der Schneiddüse (1) ein Hilfsgas (3) geleitet wird und in der äußeren Grenzschicht (6) des Schneidgasstrahles in Richtung auf die zu bearbeitende Oberfläche des Glases (4) strömt.

7. Verfahren nach Anspruch 6, dadurch gekennzeichnet, daß das das Hilfsgas (3) Wasserstoff umfaßt, welcher mit Sauerstoff des Schneidgases verbrennt.

8. Verfahren nach einem der Ansprüche 1 bis 7, dadurch gekennzeichnet, daß das Glas (4) bei einer Temperatur geschnitten wird, bei welcher das Glas (4) einerseits Standfestigkeit aufweist und andererseits weitgehend spannungsfrei ist.

9. Verfahren nach einem der Ansprüche 1 bis 8, dadurch gekennzeichnet, daß das Glas (4) bei einer Temperatur geschnitten wird, bei der lg $\eta$ einen Wert zwischen 8 und 17 aufweist und $\eta$ die dynamische Viskosität des Glases (4), gemessen in Pa · s, ist.

10. Verfahren nach Anspruch 9, dadurch gekennzeichnet, daß das Glas (4) bei einer Temperatur geschnitten wird, bei der Wert lg $\eta$ der dynamischen Viskosität $\eta$ des Glases (4) zwischen 9 und 13 liegt.

11. Verfahren nach einem der Ansprüche 1 bis 10, dadurch gekennzeichnet, daß das Schneidgas koaxial mit dem Laserstrahl auf die Oberfläche des Glases (4) geführt wird.

12. Verfahren nach einem der Ansprüche 1 bis 11, dadurch gekennzeichnet, daß der Laserstrahl im wesentlichen fokussiert auf die Oberfläche des Glases (4) an der Bearbeitungsstelle trifft.

# Figur

Europäisches
Patentamt

**EUROPÄISCHER RECHERCHENBERICHT**

Nummer der Anmeldung

EP 98 11 4658

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DE 42 24 282 A (SCHMIDT KRISTINA DIPL ING ;ECKSTEIN MANUELA DR ING (DE); HUELSENBE) 27. Januar 1994 * Spalte 2, Zeile 38 - Zeile 51; Ansprüche 1-3; Abbildung 1 * | 1-12 | B23K26/00 C03B33/08 |
| A | GB 1 433 563 A (COMMISSARIAT ENERGIE ATOMIQUE) 28. April 1976 * Ansprüche 1,4; Abbildung 4 * | 1-12 | |
| A | US 4 467 168 A (MORGAN GEORGE M ET AL) 21. August 1984 * Spalte 7, Zeile 44 - Zeile 57; Abbildung 2 * | 1-12 | |
| A | GB 1 292 981 A (BRITISH OXYGEN COMPANY LIMITED) 18. Oktober 1972 * Seite 1, Zeile 33 - Zeile 42 * * Seite 1, Zeile 73 - Zeile 80; Anspruch 1 * | 1-12 | RECHERCHIERTE SACHGEBIETE (Int.Cl.6) B23K C03B |

Der vorliegende Recherchenbericht wurde für alle Patentansprüche erstellt

| Recherchenort | Abschlußdatum der Recherche | Prüfer |
|---|---|---|
| MÜNCHEN | 11. Januar 1999 | Pricolo, G |

# EP 0 901 870 A1

## ANHANG ZUM EUROPÄISCHEN RECHERCHENBERICHT
## ÜBER DIE EUROPÄISCHE PATENTANMELDUNG NR.

EP 98 11 4658

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-01-1999

| Im Recherchenbericht angeführtes Patentdokument | Datum der Veröffentlichung | Mitglied(er) der Patentfamilie | Datum der Veröffentlichung |
|---|---|---|---|
| DE 4224282 A | 27-01-1994 | KEINE | |
| GB 1433563 A | 28-04-1976 | FR 2228040 A<br>BE 813811 A | 29-11-1974<br>16-08-1974 |
| US 4467168 A | 21-08-1984 | CA 1188747 A<br>EP 0062484 A<br>JP 57209838 A | 11-06-1985<br>13-10-1982<br>23-12-1982 |
| GB 1292981 A | 18-10-1972 | KEINE | |

Für nähere Einzelheiten zu diesem Anhang : siehe Amtsblatt des Europäischen Patentamts, Nr.12/82